# EUROPEAN PATENT SPECIFICATION

(11) **EP 4 409 236 B1**
(45) Date of publication and mention of the grant of the patent: **06.05.2026**
(21) Application number: 22846329.5
(22) Date of filing: 11.04.2022
(51) Int. Cl.: G01C 21/34, B60W 30/182, B60W 40/02, B60W 40/10, B60W 20/12, B60W 30/188, B60W 60/00, B60W 50/00

(54) **METHOD FOR GENERATING AN ADJUSTMENT ENERGY-EFFICIENT TRACK**
VERFAHREN ZUR ERZEUGUNG EINER EINSTELLUNGSENERGIEEFFIZIENTEN SPUR
PROCÉDÉ DE GÉNÉRATION D'UNE VOIE DE RÉGLAGE À FAIBLE CONSOMMATION D'ÉNERGIE

(30) Priority: 01.10.2021 RU 2021128642; 01.10.2021 RU 2021128643; 01.10.2021 RU 2021128644; 01.10.2021 RU 2021128645
(43) Date of publication of application: 07.08.2024
(73) Proprietor: Pankov, Boris Valerevich, 03540 Alicante (ES)
(72) Inventor: Pankov, Boris Valerevich, 03540 Alicante (ES)
(74) Representative: Pribic, Jelena
(86) International application number: PCT/RU2022/050125
(87) International publication number: WO 2023/003493

(56) References cited:
- EP-A1- 3 453 583
- WO-A1-2010/074668
- WO-A1-2021/045651
- CN-A- 105 303 861
- GB-A- 2 567 008
- JP-A- 2001 124 575
- RU-C1- 2 741 818
- US-A1- 2012 271 542
- US-A1- 2019 283 600
- US-A1- 2020 027 355
- US-A1- 2021 061 278
- US-B1- 10 061 637

## Description

### FIELD OF INVENTION

The proposed invention relates to methods for controlling energy consumption by a motor vehicle, and can be used in transportation industry.

### BACKGROUND OF THE INVENTION

There is a known method for evaluating the fuel efficiency of a motor vehicle disclosed in patent KR101526431B1, published on 06.05.2015 on 12 sheets (D1). The method of D1 is implemented by a device for evaluating the fuel efficiency of a motor vehicle, the device comprising: a data collection unit that collects data on driving, as well status and identification data of a plurality of motor vehicles, including the first motor vehicle; a driving index calculator that calculates driving indexes of each motor vehicle based on their driving data; a means for extracting an analogous group that extracts a group of motor vehicles, which are similar to the first motor vehicle, from a plurality of motor vehicles, based on their driving indexes and status data; a means for fuel efficiency evaluation that evaluates the fuel efficiency of the first motor vehicle based on its driving data and identification data in the analogous group; and a means for controlling a motor vehicle that controls the method of steering the motor vehicle or the method for improving the driving of the first motor vehicle, based on the fuel efficiency evaluation. According to the invention, the fuel efficiency of a motor vehicle can be evaluated with precision taking into account driver's habits and the current condition of the vehicle. In addition, the method of steering the motor vehicle and the driving mode based on the assessment of the vehicle's fuel are provided to the driver, so that he/she can improve his/her driving efficiency and the efficiency of steering the motor vehicle, as well as reduce the cost of vehicle maintenance.

The method disclosed in D1 does not use the information on the specific portion of the route that was covered by the first motor vehicle, which reduces the accuracy of fuel consumption estimation. In addition, the method disclosed in D1 uses the information obtained from motor vehicles with similar specifications and similar driving mode only, which prevents the method from being used in a global fuel consumption control system comprising multiple motor vehicles with different specifications. In addition, the method disclosed in D1 is used to identify operational problems of motor vehicles that affect the fuel consumption levels and require certain vehicle parts to be repaired or replaced, and so this method cannot be used to change the motor vehicle driving mode in order to reduce the energy consumption on a given portion of the route. In addition, the solution disclosed in D1 does not propose any specific or special means or methods to generate a model of the motor vehicle moving in an urban area, resulting from other motor vehicles moving along trajectories located on corresponding portions of the route, actual or estimated presence of other motor vehicles, including on other portions of the route. The method disclosed in D1 can be considered the closest prior art to the claimed invention.

Document GB 2 567 008 A discloses a method for generating an adjustment energy-efficient track for a vehicle in operation, that is performed by a computer's CPU.

### BRIEF SUMMARY OF THE INVENTION

The technical problem to be solved by the claimed invention is to provide a method, a device and a non-transitory computer-readable medium that do not possess the drawbacks of the prior art and thus make it possible to generate an accurate energy-efficient track for a motor vehicle that allows to reduce energy consumption by the motor vehicle moving along a portion of the route in an urban area taking into account other vehicles' trajectories.

The objective of the claimed invention is to overcome the drawbacks of the prior art and thus to reduce energy consumption by the motor vehicle moving along a portion of the route in an urban area taking into account other vehicles' trajectories, as well as to improve traffic safety.

The objective of the present invention is achieved by a method according to claim 1, by a device according to claim 12 and a medium according to claim 14.

### BRIEF DESCRIPTION OF THE DRAWINGS

Exemplary embodiments of the present invention are described in further detail below with references made to the attached drawings, included herein by reference:
Fig. 1 illustrates an exemplary, non-limiting, diagram for the method 100 for generating an energy-efficient track for the motor vehicle.
Fig. 2 illustrates an exemplary, non-limiting, diagram for the step 101 of generating an estimated track for the first motor vehicle.
Fig. 3 illustrates an exemplary, non-limiting, diagram for the step 102 of adjusting the estimated track for the first motor vehicle.
Fig. 4 illustrates an exemplary, non-limiting, diagram for the step 103 of evaluating the passing of a portion of the route by the first motor vehicle.
Fig. 5 illustrates an exemplary, non-limiting, diagram for the step 104 of generating an estimated track for the second motor vehicle.
Fig. 6 illustrates an exemplary, non-limiting, diagram for the step 105 of adjusting the estimated track for the second motor vehicle.
Fig. 7 illustrates an exemplary, non-limiting, diagram for the step 106 of evaluating the passing of a portion of the route by the second motor vehicle.
Fig. 8 illustrates an exemplary, non-limiting, diagram for the method 200 for generating an energy-efficient track for the vehicle in operation moving along a portion of the route in an urban area.
Fig. 9 illustrates an exemplary, non-limiting diagram for the system 300 for generating an energy-efficient track for an energy-efficient vehicle in operation moving along a portion of the route in an urban area.

### DETAILED DESCRIPTION OF THE INVENTION

Alternative embodiments of the present invention are provided below. This disclosure is in no way limiting to the scope of protection granted by the present patent. Rather, it should be noted that the claimed invention can be implemented in different ways, so as to include different components and conditions, or combinations thereof, which are similar to the components and conditions disclosed herein, in combination with other existing and future technologies.

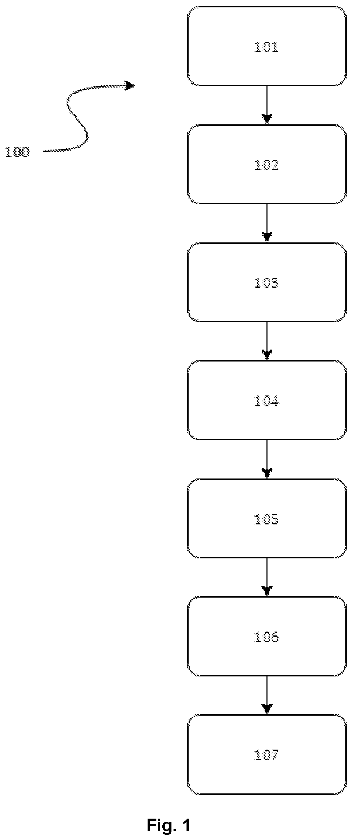

Fig. 1 illustrates an exemplary, non-limiting, diagram for the method 100 for generating an energy-efficient track for the motor vehicle. Preferably, but not limited to, the method 100 comprises the following steps: an optional step 101 of forming an estimated track for the first motor vehicle; an optional step 102 of adjusting the estimated track for the first motor vehicle; a step 103 of evaluating the passing of a portion of the route by the first motor vehicle; a step 104 of forming an estimated track for the vehicle in operation (second motor vehicle); an optional step 105 of adjusting the estimated track for the vehicle in operation (second motor vehicle); an optional step 106 of evaluating the passing of a portion of the route by the vehicle in operation (second motor vehicle); an optional step 107 of generating a track database. Preferably, but not limited to, the motor vehicle is any conventional motor vehicle, such as, but not limited to, a wheeled vehicle or a tracked vehicle, wherein the vehicle has to comprise at least one engine that consumes energy to actuate at least one moving device of the vehicle, such as, but not limited to, the wheels. The energy consumed by the engine is, for example, but not limited to, the energy produced by burning a fuel (in case the motor vehicle is equipped with an internal combustion engine), by electricity (in case the motor vehicle is equipped with an electric motor), or by a combination thereof (in case the motor vehicle is a hybrid vehicle). The first motor vehicle is a motor vehicle that passes the portion of the route first. The second motor vehicle is a motor vehicle that passes the portion of the route after the first motor vehicle. The vehicle in operation is, preferably, but not limited to, the aforementioned second motor vehicle that will pass the portion of the route after the first motor vehicle, or, but not limited to, any other motor vehicle that will pass the portion of the route after the second motor vehicle, that is, after the first motor vehicle as well. While some of the methods disclosed below are intended to be implemented as part of the motion control system of the vehicle in operation (second motor vehicle), or in connection thereto, it should be obvious to a person having ordinary skill in the art that the disclosed methods may also be implemented as part of systems or devices that are not connected to the vehicle in operation (second motor vehicle) or are indirectly connected to it, as well as in computer simulations. Preferably, but not limited to, the motor vehicles are controlled via a corresponding motor vehicle control system that comprises a set of interconnected units and components configured so that the motor vehicle can be controlled by an operator, i.e. a driver, an autonomous control system, a remote user, or a remote control system, in order to drive the motor vehicle, to stop its movement, to change the direction of its movement, to change its speed, etc. Motor vehicle control systems are widely known, and therefore are not described any further, however, preferably, but not limited to, the claimed motor vehicle control system has to comprise a speed control element of the motor vehicle, the component being one of the following or any suitable combination thereof: an accelerator pedal of the vehicle in operation (second motor vehicle), a brake pedal of the vehicle in operation (second motor vehicle), a retarder of the vehicle in operation (second motor vehicle), an intarder of the vehicle in operation (second motor vehicle), a compression brake of the vehicle in operation (second motor vehicle), a decompression brake of the vehicle in operation (second motor vehicle), or a gearbox of the vehicle in operation (second motor vehicle). Preferably, but not limited to, these elements, as well as other components of the motion control system should be equipped with a variety of sensors (such as, but not limited to, contact and contactless position sensors, encoders, induction sensors, magnetoresistive sensors, volumetric flow meters, capacitive sensors, oxygen sensors, nitrogen oxide sensors, temperature sensors, pressure sensors, knock sensors, oil level sensors, light level sensors, rain sensors, as well as various environmental sensors, such as, but not limited to, radars, lidars, cameras, global positioning sensors, odometry sensors, gyrostabilizers) allowing to read the state of each component at any given moment in time, to locate the motor vehicle at any given moment in time, and to read its technical status and other parameters at any given moment in time. Preferably, but not limited to, the sensors have to be adapted to digital data output. These sensors, as well as the methods for obtaining useful information from them, are widely known in the art, and therefore are not described in further detail. Preferably, but not limited to, the motor vehicle control system further comprises any kind of electronic devices capable of computation, such as a vehicle dashboard; a device for projecting visual information onto the windshield of the motor vehicle; a device for projecting visual information onto a head-up display (HUD); a head unit; a user device, also a wearable user device, for receiving and transmitting data (e.g. a transceiver), and for producing a GUI (e.g. a dashboard display); a display of the device for projecting visual information onto the windshield of the motor vehicle; a HUD of the device for projecting visual information onto a head-up display (HUD); a display of the head unit; a display of the user device, also a HUD of the wearable user device; a device for producing audio signals (e.g. speakers). Preferably, but not limited to, the electronic devices capable of computation comprise at least a CPU and a memory that stores the program code that, when implemented, induces the CPU to perform the steps according to some method performed by the CPU. For example, but not limited to, the CPU and memory may be the main CPU and memory of the motor vehicle control system implemented as a central controller. Preferably, but not limited to, the vehicle dashboard comprises the aforementioned CPU and memory, and/or communicates with the aforementioned central controller. Preferably, but not limited to, the device for projecting visual information onto the windshield of the motor vehicle comprises the aforementioned CPU and memory, and/or communicates with the aforementioned central controller. Preferably, but not limited to, the device for projecting visual information onto a HUD comprises the aforementioned CPU and memory, and/or communicates with the aforementioned central controller. Preferably, but not limited to, the head unit of the motor vehicle comprises the aforementioned CPU and memory, and/or communicates with the aforementioned central controller. Preferably, but not limited to, the user device communicates with the motor vehicle control system via conventional data exchange protocols and comprises the aforementioned CPU and memory, and/or communicates with the aforementioned central controller via conventional data exchange protocols. For example, but not limited to, the user device may be represented by a smartphone, a PDA, a tablet, a netbook, a laptop, etc. For example, but not limited to, the user device may be represented by a wearable user device, such as, for instance, a wearable display device as disclosed by the patent US10176783B2 or a similar one. When the user device is a wearable user device, it should be preferably, but not limited to, equipped by a HUD capable of displaying visual information. Preferably, but not limited to, the aforementioned dashboard, head unit, and the device for projecting visual information onto the windshield of the motor vehicle should comprise a corresponding display capable of visual information output, or be somehow connected to such display. Preferably, but not limited to, the aforementioned device for projecting visual information onto a HUD should comprise a corresponding HUD capable of visual information output, or be somehow connected to such display. Preferably, but not limited to, the computer devices mentioned in the present disclosure are generally any suitable computer devices that comprise at least a CPU and a memory, particularly, but not limited to, the claimed electronic devices capable of computation, the user device and the server of the system for generating an energy-efficient track for the vehicle in operation (second motor vehicle). Preferably, but not limited to, the control system of the motor vehicle may be connected via a transceiver with the user device, the server of the system for generating the energy-efficient track, other servers and control systems of other motor vehicles, but not limited to. Preferably, but not limited to, the generated estimated and/or energy-efficient tracks for each motor vehicle can be used to generate a control signal to control the movement of the corresponding motor vehicle, and/or used to generate an information signal to inform a human operator that it is necessary to change the movement of the corresponding motor vehicle.

Preferably, but not limited to, the portion of the route is a portion of the route with special properties. A route is, but not limited to, a strip of land adapted to be passable by motor vehicles, wherein the route may comprise, but not limited to, a road, a junction, an intersection, etc. A road may be, but not limited to, a paved road or a dirt road. Preferably, but not limited to, the special properties of the portion of the route may comprise at least one of the following: the geometry of the portion of the route, the road grade of the portion of the route, the allowed speed on the portion of the route, the quality of road surface of the portion of the route, speed limits on the portion of the route, turns on the portion of the route, weather conditions on the portion of the route at the moment it is passed by a motor vehicle, the infrastructure of the portion of the road, or a combination thereof. For example, but not limited to, the special properties of the portion of the route may be described through acceleration points and/or deceleration points, including estimated acceleration points and/or estimated deceleration points. In addition, but not limited to, as will be shown below, estimated tracks for motor vehicles may contain data associated with estimated acceleration points and/or estimated deceleration points, and also, but not limited to, as will be shown below, generated tracks for motor vehicles may contain data associated with actual acceleration points and/or actual deceleration points, wherein, but not limited to, such data may be analyzed and processed in order to find deviations between estimated and actual data, if any, to determine how they impact energy efficiency of a motor vehicle's movement. In addition, but not limited to, a deceleration point may be a point on the portion of the route, in which the momentum of the motor vehicle is sufficient to cover the distance to an acceleration point on the portion of the route. In addition, but not limited to, a deceleration point may be a point on the portion of the route, in which the motor vehicle has to be given negative or zero acceleration in order to smoothly reach the acceleration point, wherein the negative acceleration may be such that the motor vehicle has zero momentum at the acceleration point. In addition, but not limited to, an acceleration point may be a point on the portion of the route, in which the motor vehicle continues to move with negative acceleration. In addition, but not limited to, an acceleration point may be a point on the portion of the route, in which the motor vehicle has zero momentum. For example, but not limited to, a portion of the route may comprise a road with a slope and an upslope that follows it, wherein the beginning of the slope may be marked by a deceleration point, and an acceleration point may be placed within the upslope.

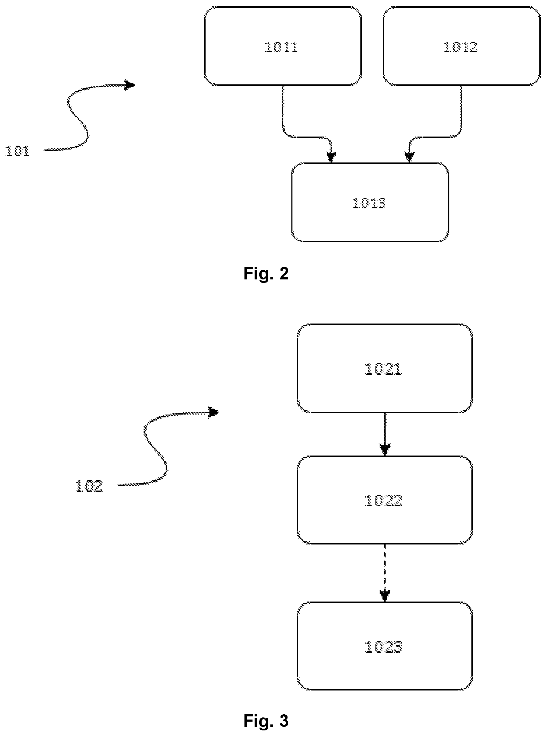

As shown in Fig. 2, the optional step 101 of generating an estimated track for the first motor vehicle, for example, but not limited to, comprises the following steps: a step 1011 of identifying the first motor vehicle; a step 1012 of identifying the portion of the route; and a step 1013 of generating an estimated track for the first motor vehicle. For example, but not limited to, the step 1011 involves determining the first motor vehicle and the data associated with it. Such data may include, for example, but not limited to, at least one of the following: the type and model of the first motor vehicle, its mass, its aerodynamic characteristics, its wheel formula, its estimated and/or actual energy consumption and data from its acceleration sensors and/or speed sensors, data from its positioning sensors, weight sensors, and wheel speed sensors, and/or a combination thereof. In general, it should be noted that such data may be used to generate an estimated speed profile of the first motor vehicle on a given portion of the route. The step 1011 further involves determining the location of the first motor vehicle relative to the portion of the route that is identified in the step 1012. In addition, for example, but not limited to, the step 1012 involves determining the first portion of the route along the direction of movement of the first motor vehicle, relative to its location. The step 1012 further involves determining the special properties of the portion of the route, which are data associated with the portion of the route to be passed by the first motor vehicle. In general, it should be noted that the data about the special properties of the portion of the route may be used to generate an estimated speed profile of the first motor vehicle on this portion of the route. In addition, for example, but not limited to, the step 1013 involves generating an estimated track for the first motor vehicle on the portion of the route using the data associated with the first motor vehicle and the data associated with the portion of the route to be passed by the first motor vehicle. Therefore, the generated estimated track for the first motor vehicle contains both the data associated with the first motor vehicle and the data associated with the portion of the route to be passed by the first motor vehicle. Preferably, but not limited to, the generated estimated track for the first motor vehicle further contains the estimated speed profile of the first motor vehicle, which, in turn, contains at least estimated locations of the first motor vehicle on the portion of the route and estimated speeds of the first motor vehicle on the portion of the route associated with said estimated locations. The estimated speed profile of the first motor vehicle further contains, but not limited to, estimated states of the speed control element of the first motor vehicle, which is one of the following: the accelerator pedal of the first motor vehicle, its brake pedal, its retarder, its intarder, its compression brake, decompression brake, its gearbox, or a combination thereof; wherein the state of the speed control element, according to the present disclosure, comprises the positions of the moving parts of the corresponding control element in its active state, i.e. relative to the state, in which the corresponding element is not activated, and/or any other active state of the element, and/or any other non-active state of the element; and wherein the estimated states of the control element are also associated with the corresponding estimated location of the motor vehicle on the portion of the route. Subsequently, the first motor vehicle moves along the given portion of the route in accordance with the estimated track for the first motor vehicle, wherein it is assumed that the estimated track is energy efficient. A motor vehicle track can be considered energy efficient in case both the time spent by the motor vehicle to pass the portion of the route and the energy consumed by the motor vehicle to pass the portion of the route are minimal. However, it should be obvious to a person having ordinary skill in the art that the estimated track for the first motor vehicle, generated in step 101, may be also generated using alternative ways.

As shown in Fig. 3, the optional step 102 of adjusting the estimated track for the first motor vehicle, for example, but not limited to, comprises the following steps: a step 1021 of determining the actual speed profile of the first motor vehicle in at least one of the moments when it passes the portion of the route; a step 1022 of comparing the actual speed profile with the corresponding estimated speed profile from the estimated track for the first motor vehicle; and, if necessary, a step 1023 of adjusting the actual speed profile in response to the results of said comparison. For example, but not limited to, the step 1021 involves determining the location of the first motor vehicle on the portion of the route, together with at least a single wheel speed of the first motor vehicle in the specified moment in time. In addition, for example, but not limited to, the step 1022 involves determining the estimated wheel speed of at least a single wheel of the first motor vehicle in the specified moment in time, as well as matching the actual wheel speed and the estimated wheel speed. In addition, for example, but not limited to, in case the actual wheel speed differs from the estimated wheel speed, an energy consumption control signal is generated for the first motor vehicle in step 1023. This energy consumption control signal, for example, but not limited to, contains a control signal for the motion control system of the first motor vehicle, which changes the operation of the engine, and/or the brake system, and/or other technical components of the first motor vehicle, so that the actual wheel speed matches the estimated wheel speed in the specified moment in time. However, it should be obvious to a person having ordinary skill in the art that although the adjustment of the estimated track for the first motor vehicle enhances the accuracy of the subsequent generation of the energy-efficient track for the vehicle in operation (second motor vehicle) thus allowing to reduce energy consumption by the vehicle in operation (second motor vehicle) on a specific portion of the route, said adjustment is optional, since the actual track of the first motor vehicle, which is generated according to the method described below, may be sufficient for generating an accurate energy-efficient track for the vehicle in operation (second motor vehicle).

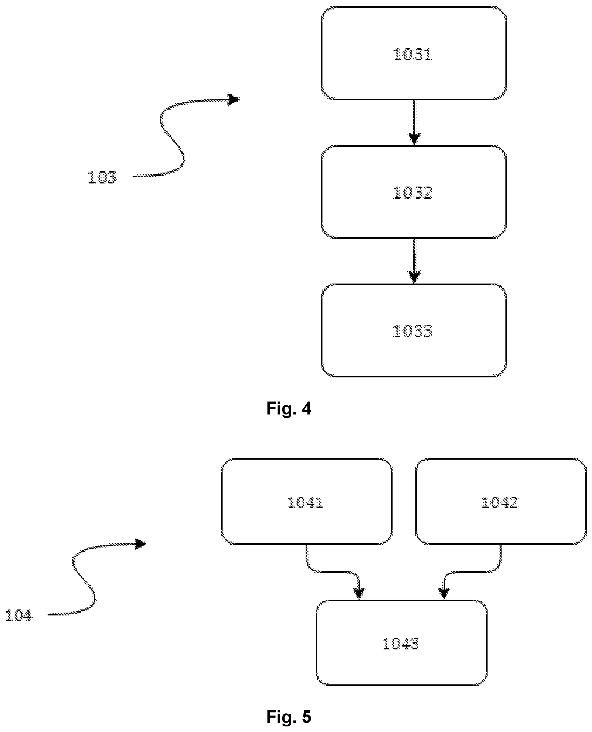

As shown in Fig. 4, the step 103 of evaluating the passing of a portion of the route by the first motor vehicle, which is also a step of collecting secondary data, comprises, but not limited to, the following steps: a step 1031 of collecting secondary data associated with the first motor vehicle and/or secondary data associated with the portion of the route passed by the first motor vehicle; a step 1032 of generating a track for the first motor vehicle; and a step 1033 of evaluating energy efficiency of the track of the first motor vehicle. For example, but not limited to, the step 1031 of collecting secondary data involves determining the fact of passing the portion of the route by the first motor vehicle, for example, but not limited to, based on the location of the first motor vehicle relative to the boundaries of the portion of the route, as well as (optionally) refining the data associated with the first motor vehicle and/or the portion of the route. In general, it should be noted that, in this step, the actual data associated with the first motor vehicle and/or the portion of the route it has passed are collected. In general, it should be noted that such data may be used to generate the actual track of the first motor vehicle, based on how it passed a given portion of the route. It should also be noted that refined data associated with the first motor vehicle and/or the portion of the route can be used to evaluate energy efficiency of the track generated for the first motor vehicle. In addition, for example, but not limited to, the step 1032 is the same as the step 1012, apart from the fact that the secondary data collected in step 1031 can be used to generate a track for the first motor vehicle along with the primary data associated with the first motor vehicle and/or the portion of the route. Thus, the actual track for the first motor vehicle generated in step 1032 also contains the actual data associated with the first motor vehicle, including, but not limited to, the actual speed profile of the first motor vehicle on the portion of the route and the actual data associated with the portion of the route. In addition, but not limited to, the actual speed profile of the first motor vehicle contains, but not limited to, actual locations of the first motor vehicle on the portion of the route and its actual speeds on the portion of the route that are associated with its actual locations on the portion of the route, as well as actual states of the speed control elements of the first motor vehicle, which are also associated with its actual locations on the portion of the route. In addition, for example, but not limited to, the step 1033 involves evaluating energy efficiency of the track generated for the first motor vehicle. In general, it should be noted that the track generated for the first motor vehicle will be considered energy efficient in case both the time spent by the first motor vehicle to pass the portion of the route and the energy consumed by the first motor vehicle to pass the portion of the route are minimal. Thus, it should be noted that, in step 1033, energy efficiency of the estimated track for the first motor vehicle is compared to that of the track generated for the first motor vehicle. It should also be noted that in case the track generated for the first motor vehicle is more energy-efficient than the estimated track for the first motor vehicle, then the estimated track for the vehicle in operation (second motor vehicle) is generated using the generated (actual) track, even if it is different from the estimated track for the first motor vehicle. Otherwise, it should be noted that the estimated track for the vehicle in operation (second motor vehicle) is also generated based on the actual track for the first motor vehicle, taking into account the secondary data associated with the first motor vehicle and/or the portion of the route passed by it. In addition, the estimated track for the first motor vehicle can also be adjusted based on how the first motor vehicle passed the given portion of the route, using the refined data associated with the first motor vehicle and/or the portion of the route. In this case, energy efficiency of the generated estimated track for the first motor vehicle is evaluated relative to the adjusted estimated track for the first motor vehicle. In general, it should be noted that the estimated track to be generated for the vehicle in operation (second motor vehicle) has to be energy efficient, and it has to be generated taking into account the properties of the actual track of the first motor vehicle. However, it should be obvious to a person having ordinary skill in the art that the estimated track for the first motor vehicle, as was mentioned above, can be any estimated track for the first motor vehicle that contains the data associated with the first motor vehicle and the data associated with the portion of the route to be passed by the first motor vehicle, including, but not limited to, the estimated track for the first motor vehicle that was adjusted in step 102.

As will be demonstrated below, the steps of generating estimated and/or energy-efficient tracks for the second motor vehicle, as well as for any of the following motor vehicles to pass the portion of the route after the first motor vehicle, are essentially the same and may be interchangeable. For example, without limitation, generation of estimated and/or energy-efficient tracks for the vehicle in operation (second motor vehicle) will be demonstrated, however, as was mentioned above, it should be obvious to a person having ordinary skill in the art that the aforementioned methods can be used to generate corresponding tracks for any motor vehicle that is to pass the given portion of the route after the first motor vehicle. As shown in Fig. 5, the step 104 of generating an estimated track for the vehicle in operation (second motor vehicle) comprises the following steps: a step 1041 of identification the first motor vehicle; a step 1042 of identifying the portion of the route; and a step 1043 of generating an estimated track for the first motor vehicle. For example, but not limited to, the step 1041 is the same as the step 1011, apart from the fact that the collected data associated with the vehicle in operation (second motor vehicle) are not the data associated with the first motor vehicle. In addition, for example, but not limited to, depending on the collected data associated with the vehicle in operation (second motor vehicle), an additional adjustment coefficient, or any other normalization methods may be used, in case the data associated with the vehicle in operation (second motor vehicle) differ from any of the data associated with the first motor vehicle. In addition, for example, but not limited to, in the same step, the data of the portion of the route may also be refined, in case they can be refined without using the data from the track for the first motor vehicle, such as, but not limited to, weather data associated with the portion of the route, which will be relevant at the moment the vehicle in operation (second motor vehicle) passes the given portion of the route, as well as infrastructure data of the portion of the route. In general, it should be noted that the first motor vehicle and the vehicle in operation (second motor vehicle) are different, and therefore energy efficiency of their tracks on a given portion of the route should also be evaluated differently, preferably, but not limited to, in the way of adjusting their values relative to the normalized values. In addition, for example, but not limited to, the step 1042 is the same as the step 1012, apart from the fact that, when collecting the data associated with the portion of the route, the refined data associated with the portion of the route from the track generated for the first motor vehicle are also collected. In general, it should be noted that, in step 1042, the collected data associated with the portion of the route will be more accurate than the similar data from the estimated track for the first motor vehicle. In addition, for example, but not limited to, the step 1043 is the same as the step 1013, apart from the fact that the data from the track generated for the first motor vehicle are collected (and, optionally, normalized) along with the data associated with the first motor vehicle and/or the portion of the route, which are also collected and, optionally, normalized. In general, it should be noted that, in step 1043, there is generated an estimated track for the vehicle in operation (second motor vehicle) that takes into account both the properties of the portion of the route or the characteristics of the vehicle in operation (second motor vehicle) and how the first motor vehicle passed the portion of the route. Preferably, but not limited to, the generated estimated track for the vehicle in operation (second motor vehicle) further contains the estimated speed profile of the vehicle in operation (second motor vehicle), which, in turn, contains at least estimated locations of the vehicle in operation (second motor vehicle) on the portion of the route and estimated speeds of the vehicle in operation (second motor vehicle) on the portion of the route associated with said estimated locations. The estimated speed profile of the vehicle in operation (second motor vehicle) further contains, but not limited to, estimated states of the speed control element of the vehicle in operation (second motor vehicle), which is one of the following: the accelerator pedal of the first motor vehicle, its brake pedal, its retarder, its intarder, its compression brake, decompression brake, its gearbox, or a combination thereof; wherein the state of the speed control element, according to the present disclosure, comprises the positions of the moving parts of the corresponding control element in its active state, i.e. relative to the state, in which the corresponding element is not activated, and/or any other active state of the element, and/or any other non-active state of the element; and wherein the estimated states of the control element are also associated with the corresponding estimated location of the vehicle in operation (second motor vehicle) on the portion of the route. In addition, but not limited to, as was shown above, the speed profile of the vehicle in operation (second motor vehicle) may be normalized according to the data associated with the first motor vehicle. In addition, but not limited to, the speed profile of the vehicle in operation (second motor vehicle) can be adjusted in advance based on the actual speed profile of the first motor vehicle, depending on the refined data associated with the portion of the route. More specifically, but not limited to, in step 1013, the properties of the portion of the route could not be considered with sufficient accuracy, since there were no actual data associated with the portion of the route, such as, but not limited to, the quality of pavement or temporary obstacles, and due to that fact the estimated track for the first motor vehicle could not possibly be energy efficient. In general, it should be noted that the estimated track for the first motor vehicle was generated using the data provided by the motor vehicle itself and external data sources only. However, but not limited to, based on how the first motor vehicle passed the given portion of the route, the track generated for the first motor vehicle can be significantly different from the estimated track for the first motor vehicle, for example, because the operator or the motion control system of the first motor vehicle were constantly assessing the situation on the portion of the route, which allowed the vehicle to pass it with higher energy efficiency than that of the estimated track, including by means of adjusting the estimated track. Thus, the estimated track generated for the vehicle in operation (second motor vehicle) has by any means, not necessarily due to normalization, higher energy efficiency than the estimated track for the first motor vehicle. As will be shown below in the present disclosure, it is the estimated track generated for the vehicle in operation (second motor vehicle) that becomes the pre-generated energy-efficient track for the vehicle in operation.

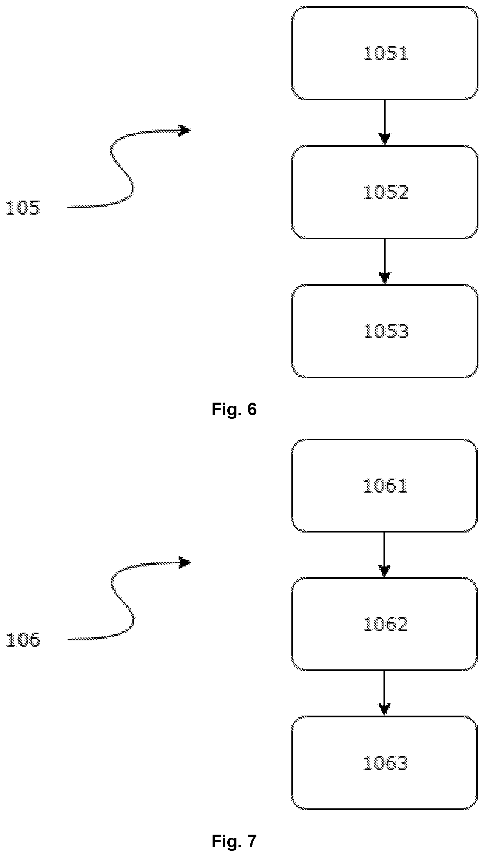

As shown in Fig. 6, the optional step 105 of adjusting the estimated track for the vehicle in operation (second motor vehicle), for example, but not limited to, comprises the following steps: a step 1051 of determining the actual speed profile of the vehicle in operation (second motor vehicle) in at least one of the moments when it passes the portion of the route; a step 1052 of comparing the actual speed profile with the corresponding estimated speed profile from the estimated track for the vehicle in operation (second motor vehicle); and, if necessary, a step 1053 of adjusting the actual speed profile in response of the vehicle in operation (second motor vehicle) to the results of said comparison. For example, but not limited to, the step 1051 involves determining the location of the vehicle in operation (second motor vehicle) on the portion of the route, together with at least a single wheel speed of the second motor vehicle in the specified moment in time. In addition, for example, but not limited to, the step 1052 involves determining the estimated wheel speed of at least a single wheel of the vehicle in operation (second motor vehicle) in the specified moment in time, as well as matching the actual wheel speed and the estimated wheel speed. In addition, for example, but not limited to, in case the actual wheel speed differs from the estimated wheel speed, an energy consumption control signal is generated for the second motor vehicle in step 1053. This energy consumption control signal, for example, but not limited to, contains a control signal for the motion control system of the second motor vehicle, which changes the operation of the engine, and/or the brake system, and/or other technical components of the second motor vehicle, so that the actual wheel speed matches the estimated wheel speed in the specified moment in time. However, it should be obvious to a person having ordinary skill in the art that although the adjustment of the estimated track for the vehicle in operation (second motor vehicle) enhances the accuracy of the subsequent generation of the energy-efficient track for the following motor vehicles thus allowing to reduce energy consumption by the following motor vehicles on a specific portion of the route, said adjustment is optional, since the step 103 described above may be sufficient for generating accurate energy-efficient tracks for the following motor vehicles.

As shown in Fig. 7, the optional step 106 of evaluating the passing of a portion of the route by the vehicle in operation (second motor vehicle) involves, for example, but not limited to, the following steps: a step 1061 of collecting secondary data associated with the vehicle in operation (second motor vehicle) and/or secondary data associated with the portion of the route passed by the vehicle in operation (second motor vehicle); a step 1062 of generating an actual track for the vehicle in operation (second motor vehicle); and a step 1063 of evaluating energy efficiency of the track of the vehicle in operation (second motor vehicle). For example, but not limited to, the step 1061 of collecting secondary data involves determining the fact of passing the portion of the route by the vehicle in operation (second motor vehicle), for example, but not limited to, based on the location of the vehicle in operation (second motor vehicle) relative to the boundaries of the portion of the route and/or relative to the location of the first motor vehicle at the moment of determining the fact of passing, as well as (optionally) refining the data associated with the vehicle in operation (second motor vehicle) and/or the portion of the route. In general, it should be noted that, in this step, the actual data associated with the vehicle in operation (second motor vehicle) and/or the portion of the route it has passed are collected. In general, it should be noted that such data may be used to generate the actual track of the vehicle in operation (second motor vehicle), based on how it passed a given portion of the route. It should also be noted that refined data associated with the vehicle in operation (second motor vehicle) and/or the portion of the route can be used to evaluate energy efficiency of the actual track generated for the vehicle in operation (second motor vehicle). In addition, for example, but not limited to, the step 1062 is the same as the step 1032, apart from the fact that the secondary data collected in step 1061 can be used to generate the actual track for the vehicle in operation (second motor vehicle) along with the primary data associated with the first motor vehicle and/or the portion of the route, and along with the secondary data collected in step 1032. Thus, the actual track for the vehicle in operation (second motor vehicle) generated in step 1062 also contains the actual data associated with the vehicle in operation (second motor vehicle), including the actual speed profile of the vehicle in operation (second motor vehicle) on the portion of the route and the actual data associated with the portion of the route, wherein these data may optionally be normalized relative to the data collected in step 1032. In addition, for example, but not limited to, the step 1063 involves evaluating energy efficiency of the track generated for the vehicle in operation (second motor vehicle). In general, it should be noted that the track generated for the vehicle in operation (second motor vehicle) will be considered energy efficient in case both the time spent by the vehicle in operation (second motor vehicle) to pass the portion of the route and the energy consumed by the vehicle in operation (second motor vehicle) to pass the portion of the route are minimal. Thus, it should be noted that, in step 1063, energy efficiency of the estimated track for the vehicle in operation (second motor vehicle) is compared to that of the actual track generated for the vehicle in operation (second motor vehicle). It should also be noted that in case the actual track for the vehicle in operation (second motor vehicle) is more energy-efficient than the estimated track for the vehicle in operation (second motor vehicle), then the estimated track for any of the following motor vehicles is generated using the generated (actual) track for the vehicle in operation (second motor vehicle), even if it is different from the estimated track for the vehicle in operation (second motor vehicle), wherein the following motor vehicle is any motor vehicle that is to pass the given portion of the route after the vehicle in operation (second motor vehicle). Otherwise, it should be noted that the estimated track for the following motor vehicle is also generated based on the actual track for the vehicle in operation (second motor vehicle), taking into account the secondary data associated with the vehicle in operation (second motor vehicle) and/or the portion of the route passed by it. In addition, the estimated track for the vehicle in operation (second motor vehicle) can also be adjusted based on how the vehicle in operation (second motor vehicle) passed the given portion of the route, using the refined data associated with the vehicle in operation (second motor vehicle) and/or the portion of the route. In this case, energy efficiency of the generated estimated track for the vehicle in operation (second motor vehicle) is evaluated relative to the adjusted estimated track for the vehicle in operation (second motor vehicle). In general, it should be noted that the estimated track to be generated for the following motor vehicle has to be energy efficient, and it has to be generated taking into account the properties of the actual track of the vehicle in operation (second motor vehicle). However, it should be obvious to a person having ordinary skill in the art that although the evaluation of how the vehicle in operation (second motor vehicle) passes a given portion of the route enhances the accuracy of the subsequent generation of the energy-efficient tracks for the following motor vehicles thus allowing to reduce energy consumption by these motor vehicles on a specific portion of the route, said evaluation is optional, since the aforementioned estimated track for the vehicle in operation, or even the aforementioned estimated track for the vehicle in operation (second motor vehicle), may be sufficient for subsequent generation of a model energy-efficient track for any of the following motor vehicles.

The optional step 107 of generating a track database involves, for example, but not limited to, collecting a plurality of tracks of motor vehicles generated based on how these motor vehicles, i.e., at least the first motor vehicle and the vehicle in operation (second motor vehicle), passed the portion of the route. For example, but not limited to, in step 107, the plurality of tracks of motor vehicles that have passed the portion of the route are collected. In addition, for example, but not limited to, in step 107, the collected tracks are systematized, so that these data can be used to generate a plurality of estimated tracks for the following motor vehicles. In addition, but not limited to, the plurality of such tracks can be used as an input for analysis, including by machine learning tools, in order to generate the most energy-efficient (model) track that would be suitable for any motor vehicle. Such model track can be unique for each motor vehicle and can subsequently be used as the estimated track for the first motor vehicle, whereupon the steps according to the method for generating an energy-efficient track will be performed again in order to generate a different model track for the same motor vehicle. In addition, but not limited to, such data can be used to change the properties of the portion of the route so as to ensure the generation of the most energy-efficient model track. However, it should be obvious to a person having ordinary skill in the art that although the forming of the track database enhances the accuracy of the subsequent generation of the energy-efficient tracks for the following motor vehicles thus allowing to reduce energy consumption by these motor vehicles on a specific portion of the route, said evaluation is optional, since the aforementioned estimated track for the vehicle in operation, or even the aforementioned estimated track for the vehicle in operation (second motor vehicle), may be sufficient for subsequent generation of model energy-efficient tracks for the following motor vehicles.

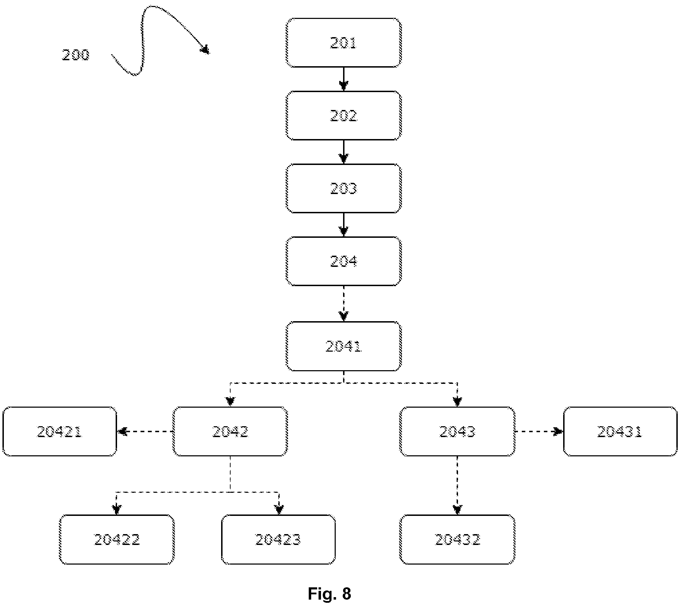

It should be noted that, when the vehicle in operation is moving along a portion of the route in an urban area, i.e. a portion of the route along which one or more motor vehicles, other than the vehicle in operation, may be moving and which may intersect or connect to other such portions of the route, and the traffic on which is governed by certain traffic regulations, there may be provided the method 200 for generating an energy-efficient track for the vehicle in operation moving along a portion of the route in an urban area. For example, but not limited to, this method 200 is performed by any of the aforementioned computer devices and generates a track for the vehicle in operation that is both energy efficient and safe, since it takes into account trajectories of other motor vehicles. For example, but not limited to, this method 200 comprises at least the following steps: generating 201 the first energy-efficient track for the vehicle in operation moving along a portion of the route in an urban area, the track comprising at least a speed profile of the vehicle in operation and its trajectory on the portion of the route, wherein the first energy-efficient track for the vehicle in operation is generated for a portion of the route, which is free from other vehicles; detecting 202 a second motor vehicle located on the same portion of the route and generating an energy-efficient track for the second motor vehicle, the track comprising at least a speed profile of the second motor vehicle and its trajectory on the portion of the route, wherein the energy-efficient track for the second motor vehicle is generated for the portion of the route, which is free from other vehicles; comparing 203 the first energy-efficient track for the vehicle in operation and the energy-efficient track for the second motor vehicle in order to obtain the comparison data comprising the data of joint trajectories of the vehicle in operation and the second motor vehicle moving along the portion of the route with their respective speed profiles; and generating 204 the second energy-efficient track for the vehicle in operation based on the comparison data obtained. Therefore, for example, but not limited to, energy efficient and safe motion of the vehicle in operation is provided in an urban area, taking into account dynamic obstacles on the portion of the route, such as other motor vehicles. Preferably, but not limited to, in step 201, first, the first energy-efficient track for the vehicle in operation is generated, which is, preferably, but not limited to, an energy-efficient track, as was shown with reference to Figs. 1-7, but which also includes the trajectory of the vehicle in operation on the specified given portion of the route, and wherein, preferably, but not limited to, this first energy-efficient track for the vehicle in operation is generated for an ideal portion of the route, i.e. one that is, preferably, but not limited to, free from data about other motor vehicles. Thus, but not limited to, an ideal energy-efficient track for the vehicle in operation is generated, which may be then adjusted based on the data about other motor vehicles obtained from a server of the system for generating an energy-efficient track for the vehicle in operation on a portion for the route in an urban area, and/or from servers of other city traffic control systems employed on the specified portion of the route, and/or from other motor vehicles, for example, through data exchange protocols, such as vehicle-to-vehicle (V2V) and vehicle-to-everything (V2X). Also, but not limited to, in step 202, the second motor vehicle is detected on the specified portion of the route and its energy-efficient track is generated, which, like the first energy-efficient track for the vehicle in operation mentioned above, generally, but not limited to, is an energy-efficient track, as was shown with reference to Figs. 1-7, but which also includes the trajectory of the second motor vehicle on the specified given portion of the route, and wherein, preferably, but not limited to, this energy-efficient track for the second motor vehicle is generated for an ideal portion of the route, i.e. one that is, preferably, but not limited to, free from data about other motor vehicles. Thus, but not limited to, an ideal energy-efficient track for the second motor vehicle is generated, which may be then adjusted based on the data about other motor vehicles obtained from a server of the system for generating an energy-efficient track for a motor vehicle on a portion for the route in an urban area, and/or from servers of other city traffic control systems employed on the specified portion of the route, and/or from other motor vehicles, for example, through data exchange protocols, such as vehicle-to-vehicle (V2V) and vehicle-to-everything (V2X). Preferably, but not limited to, after the first energy-efficient track for the vehicle in operation and the energy-efficient track for the second motor vehicle have been generated, i.e. when speed profile and trajectory data for both the vehicle in operation and the second motor vehicle moving along the same portion of the route have been obtained, it is possible to perform step 203, in which comparison data comprising the data of joint trajectories of the vehicle in operation and the second motor vehicle moving along the portion of the route with their respective speed profiles are obtained, and then, based on these comparison data, to perform step 204, in which the second energy-efficient track for the vehicle in operation is generated. In addition, but not limited to, the second energy-efficient track for the vehicle in operation is, optionally, different from the first energy-efficient track for the vehicle in operation, as it may turn out, based on the results of speed profile and trajectory comparison mentioned above, that the vehicle in operation and the second motor vehicle won't happen to be in the same point of the portion of the route at the same moment in time, and, therefore, there will be no need to adjust the first energy-efficient track for the vehicle in operation, and thus the first energy-efficient track for the vehicle in operation can be used in place of the second energy-efficient track for the vehicle in operation. However, but not limited to, if the comparison data indicate that the vehicle in operation and the second motor vehicle may happen to be in the same point of the portion of the route at the same time, then the first energy-efficient track for the vehicle in operation and/or the energy-efficient track for the second motor vehicle have to be adjusted, so as to prevent these vehicles from being present in the same point of the portion of the route at the same time. In order to achieve that, but not limited to, the step 204 of generating the second energy-efficient track for the vehicle in operation based on the comparison data may be performed by the CPU of an aforementioned computer device, the step comprising the following steps: comparing 2041 the trajectories of the vehicle in operation and the second motor vehicle on the same portion of the route, along which the vehicle in operation and the second motor vehicle are moving together; and a step A 2042 of generating the second energy-efficient track for the vehicle in operation, the track comprising at least the second trajectory of the vehicle in operation on the portion of the route, which does not intersect the trajectory of the second motor vehicle on the same portion of the route; or a step B 2043 of generating a second energy-efficient track for the vehicle in operation, the track comprising the trajectory of the vehicle in operation on the portion of the route, wherein this trajectory intersects the trajectory of the second motor vehicle on the same portion of the route, and an adjusted speed profile of the vehicle in operation, wherein the adjusted speed profile is generated so that only one of the vehicle in operation or the second motor vehicle would be present in the point of intersection between said trajectories of the vehicle in operation and the second motor vehicle at any given point in time. In addition, but not limited to, in step 2041, the data of the vehicle in operation and the second motor vehicle moving together along the same portion of the route are obtained, which may indicate that their trajectories intersect. In addition, but not limited to, in step 2042, the aforementioned step A is performed, in which the second energy-efficient track for the vehicle in operation is generated, which includes the second trajectory of the vehicle in operation, which does not intersect the trajectory of the second motor vehicle moving along the same portion of the route. For instance, but not limited to, the second energy-efficient track for the vehicle in operation generated in step 2042 may be useful in a situation, when the vehicle in operation is moving along a portion of the route, on which multiple trajectories are available for the vehicle in operation, wherein one of the trajectories does not intersect the trajectory of the second motor vehicle, for example, but not limited to, when the portion of the route comprises two lanes going in the same direction, and the second motor vehicle is moving along either of these lanes, and thus the trajectory for the vehicle in operation is selected, so that it moves in a lane, where there is no second motor vehicle. In addition, but not limited to, step 2042 may further include the step 20421 of generating the second energy-efficient track for the second motor vehicle that includes at least the second trajectory of the second motor vehicle on the specified portion of the route, wherein this second trajectory does not intersect the second trajectory of the vehicle in operation on the same portion of the route, wherein the second energy-efficient track for the second motor vehicle generated in step A further comprises an adjusted speed profile of the second motor vehicle, wherein said adjusted speed profile is generated so as to obtain the second trajectory of the second motor vehicle on the specified portion of the route, which does not intersect the second trajectory of the vehicle in operation on the same portion of the route. For instance, but not limited to, the second energy-efficient track for the vehicle in operation generated in step 20421 may be useful in a situation, when the original data indicated that, based on their respective profiles, the trajectories of the vehicle in operation and the second motor vehicle intersect, but an adjustment of the speed profile of the vehicle in operation in relation to the trajectory of the second motor vehicle may remove the possibility of trajectories intersecting, for example, but not limited to, when the portion of the route comprises a single lane going in a given direction and a switch to another portion of the route, and the second motor vehicle is moving along a trajectory that connects the first portion of the route and another portion of the route, but its speed prevents free movement of the vehicle in operation with its current speed profile, which thus requires the speed profile to be adjusted, so as to provide that the movement of the vehicle in operation along the specified portion of the route is energy effective and trajectories of the vehicle in operation and the second motor vehicle do not intersect, that is, but not limited to, the vehicle in operation should slow down temporarily in order to allow the second motor vehicle to switch to another portion of the route allowing the vehicle in operation to continue its movement along the first portion of the route freely. In addition, but not limited to, step 2042 may further include the step 20422 of generating the second energy-efficient track for the second motor vehicle that includes at least the second trajectory of the second motor vehicle on the specified portion of the route, wherein this second trajectory does not intersect the second trajectory of the vehicle in operation on the same portion of the route, wherein, optionally, the second energy-efficient track for the second motor vehicle generated in step A further comprises an adjusted speed profile of the second motor vehicle, wherein said adjusted speed profile is generated so as to obtain the second trajectory of the second motor vehicle on the specified portion of the route, which does not intersect the second trajectory of the vehicle in operation on the same portion of the route. For instance, but not limited to, the second energy-efficient track for the second motor vehicle generated in step 20422 may be useful in the situation described above with reference to step 20421, when the speed profile of the second motor vehicle can be adjusted, so that the second motor vehicle safely switches to another portion of the route allowing the vehicle in operation to move freely and safely along the first portion of the route without adjusting its speed profile, for example, but not limited to, in a situation, when the second motor vehicle may accelerate, so as to switch to another portion of the route before its trajectory intersects that of the vehicle in operation. In addition, but not limited to, the trajectory of the second motor vehicle may comprise a point of deceleration of the second motor vehicle on the portion of the route, and, for example, but not limited to, the second energy-efficient track for the vehicle in operation generated in step A 2042 further comprises an adjusted speed profile of the vehicle in operation, wherein said adjusted speed profile is generated so as to obtain the second trajectory of the vehicle in operation on the specified portion of the route, which does not include the point of deceleration of the second motor vehicle on the same portion of the route. For instance, but not limited to, this may be useful in a situation, when the portion of the route comprises two lanes going in the same direction and a traffic control means that forces the second motor vehicle, taking into account its trajectory, to occupy the lane that includes a point of deceleration (such as, but not limited to, a point before the switch to another portion of the route, i.e., but not limited to, a turn or a U-turn), and therefore the vehicle in operation has to occupy the lane that does not include a point of deceleration of the second motor vehicle. In addition, but not limited to, when the trajectory of the second motor vehicle includes a point of deceleration of the second motor vehicle, step 2042 may further comprise step 20423, in which step A 2042 further comprises a step of generating a second energy-efficient track for the second motor vehicle, the track comprising at least the second trajectory of the second motor vehicle on the portion of the route, wherein this trajectory includes an adjusted point of deceleration of the second motor vehicle, and wherein this adjusted point of deceleration is selected so as to provide for the second trajectory of the second motor vehicle, which does not intersect the second trajectory of the vehicle in operation on the portion of the route. For instance, but not limited to, this may be useful in a situation, when the point of deceleration of the second motor vehicle, e.g., before the switch to another portion of the route, may be shifted closer to or further from the second motor vehicle in the direction of its movement, so that the motor vehicle could speed up or slow down, respectively, so that the trajectory of the vehicle in operation does not include the point of deceleration of the second motor vehicle, for example, but not limited to, in a situation, when the vehicle in operation also needs to switch to another portion of the route, but can do it with the required level of energy efficiency without adjusting its speed profile, and when the second motor vehicle is able to adjust its speed profile in an energy efficient way, which still allows it to speed up or slow down according to the situation. In addition, but not limited to, the second energy-efficient track for the second motor vehicle generated in step A 2042 further comprises an adjusted speed profile of the second motor vehicle, wherein said adjusted speed profile is generated so as to obtain the second trajectory of the second motor vehicle on the specified portion of the route, which includes the point of deceleration of the second motor vehicle, which is not a point situated on the second trajectory of the vehicle in operation on the portion of the route. For instance, but not limited to, this may be useful in a situation, when, taking into account the trajectory of the second motor vehicle, it is possible to select several points of deceleration on the portion of the route, but any of the several points of deceleration is on the trajectory of the vehicle in operation, for example, but not limited to in a situation, when both vehicles are moving along the portion of the route comprising several lanes, one of which allows to switch to another portion of the route, and the vehicle in operation is on the trajectory allowing to make a safe and energy efficient switch to another portion of the route, taking into account its speed profile, and therefore, the point of deceleration of the second motor vehicle may be placed on the second motor vehicle's current lane, so that the vehicle in operation can switch to another portion of the route, which allows the second motor vehicle subsequently occupy the required lane that will be free from the vehicle in operation unobstructed. In addition, but not limited to, step B 2043 further comprises a step of generating a second energy-efficient track for the vehicle in operation, the track comprising the trajectory of the vehicle in operation on the portion of the route, wherein this trajectory intersects the trajectory of the second motor vehicle on the same portion of the route, and an adjusted speed profile of the vehicle in operation, wherein the adjusted speed profile is generated so that only one of the vehicle in operation or the second motor vehicle would be present in the point of intersection between said trajectories of the vehicle in operation and the second motor vehicle at any given point in time. For instance, but not limited to, this may be useful in a situation, when the portion of the route allows only such trajectories of the vehicle in operation and the second motor vehicle that intersect, and therefore, it is necessary to adjust the speed profile of the vehicle in operation, so that it won't happen to be in the same point of the portion of the route at the same time with the second motor vehicle, for example, but not limited to, when both vehicles are switching to other portions of the route, and therefore, their trajectories intersect, and the required level of energy efficiency for the vehicle in operation allows it to speed up or slow down, so as to make a safe and energy efficient switch to another portion of the route without being in the point of intersection at the same time as the second motor vehicle. In addition, but not limited to, step 2043 may further comprise step 20431 of generating a second energy-efficient track for the second motor vehicle, the track comprising the trajectory of the second motor vehicle on the portion of the route, wherein this trajectory intersects the trajectory of the vehicle in operation on the same portion of the route, and an adjusted speed profile of the second motor vehicle, wherein the adjusted speed profile is generated so that only one of the vehicle in operation or the second motor vehicle would be present in the point of intersection between said trajectories of the vehicle in operation and the second motor vehicle at any given point in time. For instance, but not limited to, this may be useful in the situation described above with reference to step 2043, but when it is not enough to adjust the speed profile of the vehicle in operation, and in order to provide energy efficient and safe movement for the vehicle in operation and the second motor vehicle, the speed profile of the second motor vehicle has to be adjusted as well. In addition, but not limited to, when the trajectory of the second motor vehicle includes a point of deceleration, step 2043 may further comprise step 20432 of generating a second energy-efficient track for the second motor vehicle, the track comprising the trajectory of the second motor vehicle on the portion of the route, wherein this trajectory intersects the trajectory of the vehicle in operation on the same portion of the route and includes an adjusted point of deceleration of the second motor vehicle, and an adjusted speed profile of the second motor vehicle, wherein the adjusted speed profile is generated and the adjusted point of deceleration of the second motor vehicle is selected so that only one of the vehicle in operation or the second motor vehicle would be present in the point of intersection between said trajectories of the vehicle in operation and the second motor vehicle at any given point in time. For instance, but not limited to, this may be useful in a situation, when the vehicle in operation and the second motor vehicle both switch to the same portion of the route, but the second motor vehicle makes the switch through a mandatory deceleration point that is intersected by the trajectory of the vehicle in operation, and therefore, the point of deceleration of the second motor vehicle and its speed profile have to be adjusted so that the movement of the vehicle in operation is energy efficient and safe. It should be obvious to a person having ordinary skill in the art that there can be multiple second motor vehicles, and, therefore, the second energy-efficient track for the vehicle in operation can be generated taking into account the data of a plurality of second motor vehicles, their energy-efficient tracks, trajectories, speed profiles, and deceleration points. It should be obvious to a person having ordinary skill in the art that in any given situation, the second motor vehicle can be considered to be the vehicle in operation and, respectively, the vehicle in operation can be considered to be one of the second motor vehicles, therefore, the steps of the method 200 described above with reference to Fig. 8 can be applied to the second motor vehicle as well. These conditions, preferable, but not limited to, allow a plurality of motor vehicles to move energy-efficiently and safely along the same portion of the route at the same time.

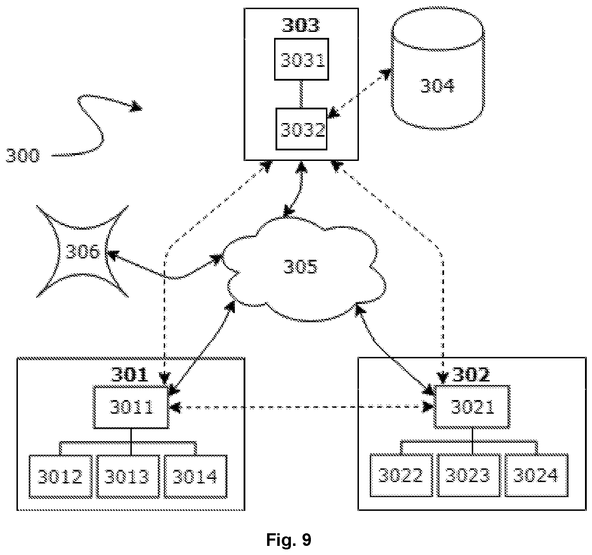

Fig. 9 illustrates an exemplary, non-limiting, diagram for the system 300 for generating an energy-efficient track for the motor vehicle. For example, but not limited to, the claimed system 300 comprises the server 303 that communicates at least with the aforementioned transceivers 3011, 3021 of the first motor vehicle 301 and the vehicle in operation (second motor vehicle) 302, respectively. In addition, but not limited to, the server 303 is a computer device comprising at least a CPU 3031 and a memory 3032. In addition, but not limited to, the memory (computer-readable medium) of the server 303 contains the program code that, when implemented, induces the CPU to perform the steps according to the method for generating an energy-efficient track for the motor vehicle that was described above. For example, but not limited to, the computer-readable medium (memory 3031) may comprise a non-volatile memory (NVRAM); a random-access memory (RAM); a read-only memory (ROM); an electrically erasable programmable read-only memory (EEPROM); a flash drive or other memory technologies; a CD-ROM, a digital versatile disk (DVD) or other optical/holographic media; magnetic tapes, magnetic film, a hard disk drive or any other magnetic drive; and any other medium capable of storing and encoding the necessary information. In addition, but not limited to, the memory 3032 comprises a computer-readable medium based on the computer memory, either volatile or non-volatile, or a combination thereof. In addition, but not limited to, exemplary hardware devices include solid-state drives, hard disk drives, optical disk drives, etc. In addition, but not limited to, the computer-readable medium (memory 3032) is not a temporary memory (i.e., a permanent, non-transitive memory), and therefore it does not contain a temporary (transitive) signal. In addition, but not limited to, the memory 3032 may store an exemplary environment, wherein the procedure of generating an energy-efficient track for the motor vehicle may be implemented using computer-readable commands or codes that are stored in the memory of the server. In addition, but not limited to, the server 303 comprises one or more CPUs 3031 which are designed to execute computer-readable commands or codes that are stored in the memory 3032 of the device in order to implement the procedure of generating an energy-efficient track for the motor vehicle. In addition, but not limited to, the system 300 may further comprise a database 304. The database 304 may be, but not limited to, a hierarchical database, a network database, a relational database, an object database, an object-oriented database, an object-relational database, a spatial database, a combination of two or more said databases, etc. In addition, but not limited to, the database 304 stores the data to be analyzed in the memory 3032 or in the memory of a different computer device that communicates with the server 303, which may be, but not limited to, a memory that is similar to any of the memories 3032, as described above, and which can be accessed via the server 303. In addition, but not limited to, the database 304 stores the data comprising at least commands to perform the steps according to the methods 100 and 200 as described above; the processed data associated with the first motor vehicle and/or the vehicle in operation (second motor vehicle), and/or the portion of the route, including refined data; estimated and generated tracks for motor vehicles; navigational data; model tracks for motor vehicles; etc. In addition, but not limited to, the exemplary system 300 further comprises, respectively, at least the first vehicle 301 and the vehicle in operation (second motor vehicle) 302. Such vehicles 301, 302 usually comprise corresponding transceivers 3011, 3021 adapted to sending the data to the server 303 that communicates with motion control systems 3012, 3022 of respective vehicles and/or with on-board information systems 3013, 3023 (if present) of respective vehicles. Optionally, but not limited to, such motor vehicles may comprise various sensors 3014, 3024 to collect data that are associated with the corresponding motor vehicle in operation, and/or the portion of the route. In addition, but not limited to, the such sensors 3014, 3024 include a positioning sensor, speed sensors (such as, but not limited to, a crankshaft position sensor, a camshaft position sensor, a throttle position sensor, an accelerator pedal position sensor, a wheel speed sensor, a power consumption sensor, e.g. injection rate or current voltage characteristic), energy consumption sensors (such as, but not limited to, fuel level sensors, battery sensors, an accelerator pedal position sensor, injection rate sensor, and an RPM sensor), temperature sensors (such as, but not limited to, a coolant temperature sensor, an ambient temperature sensor, an in-car temperature sensor), pressure sensors (such as, but not limited to, an intake manifold pressure sensor, a fuel injection pressure sensor, a tyre pressure sensor), environmental sensors (such as, but not limited to, a light level sensor, a rain sensor, a radar, a lidar, a video camera, a sonar), and sensors and speed control elements of the motor vehicle, as well as other elements of the motion control system of the motor vehicle. In addition, but not limited to, there is provided a server 303, which, in addition to the functions mentioned above, stores and facilitates the execution of computer-readable commands and codes disclosed herein, which, accordingly, will not be described again. In addition, but not limited to, the server 303, in addition to the functions mentioned above, is capable of controlling the data exchange in the system 300. In addition, but not limited to, data exchange within the system 300 is performed with the help of one or more data exchange networks 305. In addition, but not limited to, data exchange networks 305 may include, but not limited to, one or more local area networks (LAN) and/or wide area networks (WAN), or may be represented by the Internet or Intranet, or a virtual private network (VPN), or a combination thereof, etc. In addition, but not limited to, the server 303 is further capable of providing a virtual computer environment for the components of the system to interact with each other. In addition, but not limited to, the network 305 provides interaction between transceivers 3011, 3021 on motor vehicles 301, 302, the server 303, and the database 304 (optionally). In addition, but not limited to, the server 303 and the database 304 may be connected directly using conventional wired or wireless communication means and methods, which, accordingly, are not described in further detail. In addition, but not limited to, the system 300 may optionally comprise infrastructure elements 306 of the portion of the route, specifically, various technical means capable of collecting the aforementioned data that are associated with motor vehicles and/or the portion of the route, and optionally can provide the aforementioned network 305 for data exchange on the portion of the route. For example, but not limited to, such elements 306 include a weather station, a speed monitoring camera, an infrastructural transceiver of the portion of the route, pavement weight sensors, etc., as well as the data from other motor vehicles that may or may not be involved with the system 300, the data transferred and propagated in data exchange environments based on data exchange technologies, such as vehicle-to-vehicle (V2V) and vehicle-to-everything (V2X). In addition, but not limited to, one of the aforementioned on-board information systems 3013, 3023, in case it is a computer device comprising a CPU and a memory that are similar to the aforementioned CPU 3031 and memory 3032, may be represented by the aforementioned server 303 with its basic functions, wherein the aforementioned transceivers 3011, 3012 may communicate with each other using any data exchange network or directly, via wireless communication, such as, but not limited to, radio communication, acoustic communication, infrared communication, laser communication, etc., wherein the aforementioned database 304 may be implemented directly within the memory of any of the on-board information systems 3013 and 3023 (if present).In addition, but not limited to, the aforementioned motor vehicles, which are not the first motor vehicle, second motor vehicle, or the vehicle in operation, such as motor vehicles located on other portions of the route, may be represented by motor vehicles that are similar to the aforementioned motor vehicles 301, 302, and, therefore, they may be equipped with similar transceivers, motion control systems, on-board information systems, etc.

The present disclosure of the claimed invention demonstrates only certain exemplary embodiments of the invention, which by no means limit the scope of the claimed invention, meaning that it may be embodied in alternative forms that do not go beyond the scope of the present disclosure and which may be obvious to persons having ordinary skill in the art.

## Claims

1. A method for generating an energy-efficient track for a vehicle in operation moving along a portion of a route in an urban area, that is performed by a CPU of a computer device, the method comprising at least the following steps:
generating a first energy-efficient track for the vehicle in operation moving along a portion of the route in an urban area, the track comprising at least a speed profile of the vehicle in operation and its trajectory on the portion of the route, wherein the first energy-efficient track for the vehicle in operation is generated for a portion of the route, which is free from other vehicles;
detecting a second motor vehicle located on the same portion of the route and generating an energy-efficient track for the second motor vehicle, the track comprising at least a speed profile of the second motor vehicle and its trajectory on the portion of the route, wherein the energy-efficient track for the second motor vehicle is generated for the portion of the route, which is free from other vehicles;
comparing the first energy-efficient track for the vehicle in operation and the energy-efficient track for the second motor vehicle in order to obtain a comparison data comprising a data of joint trajectories of the vehicle in operation and the second motor vehicle moving along the portion of the route with their respective speed profiles;
and generating the second energy-efficient track for the vehicle in operation based on the comparison data obtained.

2. The method of claim 1, **characterized in that** the first energy-efficient track for the vehicle in operation is generated by means of the CPU of the computer device implementing a method for generating an energy-efficient track for the motor vehicle, the method comprising the following steps:
collecting primary data that involves obtaining data associated with a first motor vehicle, data associated with a portion of the route to be passed by the first motor vehicle, and data associated with the vehicle in operation, wherein the vehicle in operation passes the portion of the route after the first motor vehicle;
collecting secondary data that involves generating a track of the first motor vehicle, wherein said track is generated based on how the first motor vehicle passed the portion of the route;
generating an energy-efficient track for the vehicle in operation, wherein the energy-efficient track for the vehicle in operation is generated based on a track generated for the first motor vehicle;
wherein the track for the first motor vehicle is generated by performing the following steps:
generating a speed profile of the first motor vehicle on the passed portion of the route;
evaluating energy efficiency of the first motor vehicle on the passed portion of the route.

3. The method of claim 1, **characterized in that** the energy-efficient track for the second motor vehicle is generated by means of the CPU of the computer device implementing a method for generating an energy-efficient track for the motor vehicle, the method comprising the following steps:
collecting primary data that involves obtaining data associated with a first motor vehicle, data associated with the portion of the route to be passed by the first motor vehicle, and data associated with the second motor vehicle, wherein the second motor vehicle passes the portion of the route after the first motor vehicle, but before the vehicle in operation;
collecting secondary data that involves generating a track of the first motor vehicle, wherein said track is generated based on how the first motor vehicle passed the portion of the route;
generating an energy-efficient track for the second motor vehicle, wherein the energy-efficient track for the second motor vehicle is generated based on a track generated for the first motor vehicle;
wherein the energy-efficient track for the first motor vehicle is generated by performing the following steps:
generating a speed profile of the first motor vehicle on the passed portion of the route;
evaluating energy efficiency of the first motor vehicle on the passed portion of the route.

4. The method of any of claims 1-3, **characterized in that** the second energy-efficient track for the vehicle in operation is generated by means of the CPU of the computer device implementing the method for generating an energy-efficient track for the motor vehicle, the method comprising the following steps:
comparing the trajectories of the vehicle in operation and the second motor vehicle on the same portion of the route, along which the vehicle in operation and the second motor vehicle are moving together;
and a step A of generating the second energy-efficient track for the vehicle in operation, the track comprising at least the second trajectory of the vehicle in operation on the portion of the route, which does not intersect the trajectory of the second motor vehicle on the same portion of the route;
or a step B of generating a second energy-efficient track for the vehicle in operation, the track comprising the trajectory of the vehicle in operation on the portion of the route, wherein this trajectory intersects the trajectory of the second motor vehicle on the same portion of the route, and an adjusted speed profile of the vehicle in operation, wherein the adjusted speed profile is generated so that only one of the vehicle in operation or the second motor vehicle would be present in the point of intersection between said trajectories of the vehicle in operation and the second motor vehicle at any given point in time.

5. The method of claim 4, **characterized in that** the second energy-efficient track for the vehicle in operation generated in step A further comprises an adjusted speed profile of the vehicle in operation, wherein said adjusted speed profile is generated so as to obtain the second trajectory of the vehicle in operation on the specified portion of the route, which does not intersect the trajectory of the second motor vehicle on the same portion of the route.

6. The method of claim 5, **characterized in that** the method **characterized in that** the second energy-efficient track for the second motor vehicle generated in step A further comprises an adjusted speed profile of the second motor vehicle, wherein said adjusted speed profile is generated so as to obtain the second trajectory of the second motor vehicle on the specified portion of the route, which does not intersect the second trajectory of the vehicle in operation on the same portion of the route.

7. The method of claim 6, **characterized in that** the method **characterized in that** the second energy-efficient track for the second motor vehicle generated in step A further comprises an adjusted speed profile of the second motor vehicle, wherein said adjusted speed profile is generated so as to obtain the second trajectory of the second motor vehicle on the specified portion of the route, which does not intersect the second trajectory of the vehicle in operation on the same portion of the route.

8. The method of claim 7, **characterized in that** step B further comprises a step of generating a second energy-efficient track for the second motor vehicle, the track comprising the trajectory of the second motor vehicle on the portion of the route, wherein this trajectory intersects the trajectory of the vehicle in operation on the same portion of the route, and an adjusted speed profile of the second motor vehicle, wherein the adjusted speed profile is generated so that only one of the vehicle in operation or the second motor vehicle would be present in the point of intersection between said trajectories of the vehicle in operation and the second motor vehicle at any given point in time.

9. The method of claim 7, **characterized in that** the trajectory of the second motor vehicle comprises a point of deceleration of the second motor vehicle on the portion of the route.

10. The method of claim 9, **characterized in that** step A further comprises a step of generating a second energy-efficient track for the second motor vehicle, the track comprising at least the second trajectory of the second motor vehicle on the portion of the route, wherein this trajectory includes an adjusted point of deceleration of the second motor vehicle, and wherein this adjusted point of deceleration is selected so as to provide for the second trajectory of the second motor vehicle, which does not intersect the second trajectory of the vehicle in operation on the portion of the route.

11. The method of claim 10, **characterized in that** the second energy-efficient track for the second motor vehicle generated in step A further comprises an adjusted speed profile of the second motor vehicle, wherein said adjusted speed profile is generated so as to obtain the second trajectory of the second motor vehicle on the specified portion of the route, which includes the point of deceleration of the second motor vehicle, which is not a point situated on the second trajectory of the vehicle in operation on the portion of the route.

12. A computer device for generating an energy-efficient track for a vehicle in operation moving along a portion of a route in an urban area, the device comprising at least:
a CPU;
a memory that stores a program code that, when implemented by the CPU of the computer device, induces the CPU to perform steps according to the method for generating an energy-efficient track for the vehicle in operation moving along a portion of a route in an urban area according to any of claims 1-11.

13. A motor vehicle comprising at least:
a moving device;
an engine that is connected to and actuates the moving device;
a motor vehicle control system that is adapted to control the engine of the motor vehicle, the system comprising at least:
the computer device for generating an energy-efficient track for the vehicle in operation moving along a portion of a route in an urban area according to claim 12.

14. A non-transitory computer-readable medium that stores a program code that, when implemented by a CPU of a computer device, induces the CPU to perform steps according to the method for generating an energy-efficient track for the vehicle in operation moving along a portion of a route in an urban area, according to any of claims 1-11.

## Patentansprüche

1. Verfahren zum Erzeugen eines energieeffizienten Fahrwegs für ein sich entlang eines Streckenabschnitts in einem Stadtgebiet bewegendes Fahrzeug in Betrieb, das durch eine CPU einer Computervorrichtung ausgeführt wird, wobei das Verfahren mindestens die folgenden Schritte umfasst:
Erzeugen eines ersten energieeffizienten Fahrwegs für das Fahrzeug in Betrieb, das sich entlang eines Streckenabschnitts in einem Stadtgebiet bewegt, wobei der Fahrweg mindestens ein Geschwindigkeitsprofil des Fahrzeugs in Betrieb und seine Bewegungsbahn auf dem Streckenabschnitt umfasst, wobei der erste energieeffiziente Fahrweg für das Fahrzeug in Betrieb für einen Streckenabschnitt erzeugt wird, der frei von anderen Fahrzeugen ist,
Erfassen eines zweiten Kraftfahrzeugs, das sich auf demselben Streckenabschnitt befindet, und Erzeugen eines energieeffizienten Fahrwegs für das zweite Kraftfahrzeug, wobei der Fahrweg mindestens ein Geschwindigkeitsprofil des zweiten Kraftfahrzeugs und seine Bewegungsbahn auf dem Streckenabschnitt umfasst, wobei der energieeffiziente Fahrweg für das zweite Kraftfahrzeug für den Streckenabschnitt erzeugt wird, der frei von anderen Fahrzeugen ist;
Vergleichen des ersten energieeffizienten Fahrwegs für das Fahrzeug in Betrieb und des energieeffizienten Fahrwegs für das zweite Kraftfahrzeug, um Vergleichsdaten zu erhalten, die Daten gemeinsamer Bewegungsbahnen des Fahrzeugs in Betrieb und des zweiten Kraftfahrzeugs, die sich entlang des Streckenabschnitts mit ihren jeweiligen Geschwindigkeitsprofilen bewegen, umfassen;
und Erzeugen des zweiten energieeffizienten Fahrwegs für das Fahrzeug in Betrieb auf der Grundlage der erhaltenen Vergleichsdaten.

2. Verfahren nach Anspruch 1, **dadurch gekennzeichnet, dass** der erste energieeffiziente Fahrweg für das Fahrzeug in Betrieb mittels der CPU der Computervorrichtung erzeugt wird, die ein Verfahren zur Erzeugung eines energieeffizienten Fahrwegs für das Kraftfahrzeug umsetzt, wobei das Verfahren die folgenden Schritte umfasst:
Erfassen von Primärdaten, was das Erhalten von Daten zu einem ersten Kraftfahrzeug und Daten zu einem von dem ersten Kraftfahrzeug zu passierenden Streckenabschnitt einschließt, sowie Daten zum Fahrzeug in Betrieb, wobei das Fahrzeug in Betrieb den Streckenabschnitt nach dem ersten Kraftfahrzeug passiert,
Erfassen von Sekundärdaten, was das Erzeugen eines Fahrwegs des ersten Kraftfahrzeugs einschließt, wobei das Erzeugen des Fahrwegs auf der Grundlage davon ausgeführt wird, wie das erste Kraftfahrzeug den Streckenabschnitt passiert hat,
Erzeugen eines energieeffizienten Fahrwegs für das Fahrzeug in Betrieb, wobei der energieeffiziente Fahrweg für das Fahrzeug in Betrieb auf der Grundlage eines für das erste Kraftfahrzeug erzeugten Fahrwegs erzeugt wird;
wobei der Fahrweg für das erste Kraftfahrzeug durch Ausführen der folgenden Schritte erzeugt wird:
Erzeugen eines Geschwindigkeitsprofils des ersten Kraftfahrzeugs auf dem passierten Streckenabschnitt;
Evaluieren einer Energieeffizienz des ersten Kraftfahrzeugs auf dem passierten Streckenabschnitt.

3. Verfahren nach Anspruch 1, **dadurch gekennzeichnet, dass** der energieeffiziente Fahrweg für das zweite Kraftfahrzeug mittels der CPU der Computervorrichtung erzeugt wird, die ein Verfahren zur Erzeugung eines energieeffizienten Fahrwegs für das Kraftfahrzeug umsetzt, wobei das Verfahren die folgenden Schritte umfasst:
Erfassen von Primärdaten, was das Erhalten von Daten zu einem ersten Kraftfahrzeug und Daten zu einem von dem ersten Kraftfahrzeug zu passierenden Streckenabschnitt einschließt, sowie Daten zum zweiten Kraftfahrzeug, wobei das zweite Kraftfahrzeug den Streckenabschnitt nach dem ersten Kraftfahrzeug, aber vor dem Fahrzeug in Betrieb passiert;
Erfassen von Sekundärdaten, was das Erzeugen eines Fahrwegs des ersten Kraftfahrzeugs einschließt, wobei das Erzeugen des Fahrwegs auf der Grundlage davon ausgeführt wird, wie das erste Kraftfahrzeug den Streckenabschnitt passiert hat;
Erzeugen eines energieeffizienten Fahrwegs für das zweite Kraftfahrzeug, wobei der energieeffiziente Fahrweg für das zweite Kraftfahrzeug auf der Grundlage eines für das erste Kraftfahrzeug erzeugten Fahrwegs erzeugt wird;
wobei der energieeffiziente Fahrweg für das erste Kraftfahrzeug durch Ausführen der folgenden Schritte erzeugt wird:
Erzeugen eines Geschwindigkeitsprofils des ersten Kraftfahrzeugs auf dem passierten Streckenabschnitt;
Evaluieren einer Energieeffizienz des ersten Kraftfahrzeugs auf dem passierten Streckenabschnitt.

4. Verfahren nach einem der Ansprüche 1 bis 3, **dadurch gekennzeichnet, dass** der zweite energieeffiziente Fahrweg für das Fahrzeug in Betrieb mittels der CPU der Computervorrichtung erzeugt wird, die das Verfahren zur Erzeugung eines energieeffizienten Fahrwegs für das Kraftfahrzeug umsetzt, wobei das Verfahren die folgenden Schritte umfasst:
Vergleichen der Bewegungsbahnen des Fahrzeugs in Betrieb und des zweiten Kraftfahrzeugs auf demselben Streckenabschnitt, auf dem sich das Fahrzeug in Betrieb und das zweite Kraftfahrzeug gemeinsam bewegen;
und einen Schritt A des Erzeugens des zweiten energieeffizienten Fahrwegs für das Fahrzeug in Betrieb, wobei der Fahrweg mindestens die zweite Bewegungsbahn des auf dem Streckenabschnitt fahrenden Fahrzeugs in Betrieb umfasst, die die Bewegungsbahn des zweiten Kraftfahrzeugs auf demselben Streckenabschnitt nicht überschneidet;
oder einen Schritt B des Erzeugens eines zweiten energieeffizienten Fahrwegs für das Fahrzeug in Betrieb, wobei der Fahrweg die Bewegungsbahn des Fahrzeugs in Betrieb auf dem Streckenabschnitt umfasst, wobei diese Bewegungsbahn die Bewegungsbahn des zweiten Kraftfahrzeugs auf demselben Streckenabschnitt überschneidet, und ein angepasstes Geschwindigkeitsprofil des Fahrzeugs in Betrieb, wobei das angepasste Geschwindigkeitsprofil so erzeugt wird, dass zu jedem gegebenen Zeitpunkt nur eines von dem Fahrzeug in Betrieb oder dem zweiten Kraftfahrzeug im Schnittpunkt zwischen den Bewegungsbahnen des Fahrzeugs in Betrieb und des zweiten Kraftfahrzeugs vorhanden ist.

5. Verfahren nach Anspruch 4, **dadurch gekennzeichnet, dass** der in Schritt A erzeugte zweite energieeffiziente Fahrweg für das Fahrzeug in Betrieb außerdem ein angepasstes Geschwindigkeitsprofil des Fahrzeugs in Betrieb umfasst, wobei das angepasste Geschwindigkeitsprofil so erzeugt wird, dass die zweite Bewegungsbahn des Fahrzeugs in Betrieb auf dem bestimmten Streckenabschnitt erhalten wird, die die Bewegungsbahn des zweiten Kraftfahrzeugs auf dem gleichen Streckenabschnitt nicht überschneidet.

6. Verfahren nach Anspruch 5, **dadurch gekennzeichnet, dass** der in Schritt A erzeugte zweite energieeffiziente Fahrweg für das zweite Kraftfahrzeug ferner ein angepasstes Geschwindigkeitsprofil des zweiten Kraftfahrzeugs umfasst, wobei das angepasste Geschwindigkeitsprofil so erzeugt wird, dass die zweite Bewegungsbahn des zweiten Kraftfahrzeugs auf dem bestimmten Streckenabschnitt erhalten wird, die die zweite Bewegungsbahn des Fahrzeugs in Betrieb auf dem gleichen Streckenabschnitt nicht überschneidet.

7. Verfahren nach Anspruch 6, **dadurch gekennzeichnet, dass** der in Schritt A erzeugte zweite energieeffiziente Fahrweg für das zweite Kraftfahrzeug ferner ein angepasstes Geschwindigkeitsprofil des zweiten Kraftfahrzeugs umfasst, wobei das angepasste Geschwindigkeitsprofil so erzeugt wird, dass die zweite Bewegungsbahn des zweiten Kraftfahrzeugs auf dem bestimmten Streckenabschnitt erhalten wird, die die zweite Bewegungsbahn des Fahrzeugs in Betrieb auf dem gleichen Streckenabschnitt nicht überschneidet.

8. Verfahren nach Anspruch 7, **dadurch gekennzeichnet, dass** Schritt B ferner einen Schritt zur Erzeugung eines zweiten energieeffizienten Fahrwegs für das zweite Kraftfahrzeug umfasst, wobei der Fahrweg die Bewegungsbahn des zweiten Kraftfahrzeugs auf dem Streckenabschnitt, wobei diese Bewegungsbahn die Bewegungsbahn des Fahrzeugs in Betrieb auf demselben Streckenabschnitt überschneidet, und ein angepasstes Geschwindigkeitsprofil des zweiten Kraftfahrzeugs umfasst, wobei das angepasste Geschwindigkeitsprofil so erzeugt wird, dass zu jedem gegebenen Zeitpunkt nur eines von dem Fahrzeug in Betrieb oder dem zweiten Kraftfahrzeug im Schnittpunkt zwischen den Bewegungsbahnen des Fahrzeugs in Betrieb und des zweiten Kraftfahrzeugs vorhanden ist.

9. Verfahren nach Anspruch 7, **dadurch gekennzeichnet, dass** die Bewegungsbahn des zweiten Kraftfahrzeugs eine Verlangsamungsstelle des zweiten Kraftfahrzeugs auf dem Streckenabschnitt umfasst.

10. Verfahren nach Anspruch 9, **dadurch gekennzeichnet, dass** Schritt A ferner einen Schritt zur Erzeugung eines zweiten energieeffizienten Fahrwegs für das zweite Kraftfahrzeug umfasst, wobei der Fahrweg mindestens die zweite Bewegungsbahn des zweiten Kraftfahrzeugs auf dem Streckenabschnitt umfasst, wobei diese Bewegungsbahn eine angepasste Verlangsamungsstelle des zweiten Kraftfahrzeugs enthält, und wobei diese angepasste Verlangsamungsstelle so gewählt ist, dass die zweite Bewegungsbahn des zweiten Kraftfahrzeugs die zweite Bewegungsbahn des Fahrzeugs in Betrieb auf dem Streckenabschnitt nicht überschneidet.

11. Verfahren nach Anspruch 10, **dadurch gekennzeichnet, dass** der in Schritt A erzeugte zweite energieeffiziente Fahrweg für das zweite Kraftfahrzeug ferner ein angepasstes Geschwindigkeitsprofil des zweiten Kraftfahrzeugs umfasst, wobei das angepasste Geschwindigkeitsprofil so erzeugt wird, dass die zweite Bewegungsbahn des zweiten Kraftfahrzeugs auf dem bestimmten Streckenabschnitt erhalten wird, die die Verlangsamungsstelle des zweiten Kraftfahrzeugs einschließt, die nicht auf der zweiten Bewegungsbahn des Fahrzeugs in Betrieb auf dem Streckenabschnitt liegt.

12. Computervorrichtung zum Erzeugen eines energieeffizienten Fahrwegs für ein Fahrzeug in Betrieb, das sich entlang eines Streckenabschnitts in einem Stadtgebiet bewegt, wobei die Vorrichtung mindestens umfasst:
eine CPU;
einen Speicher, der einen Programmcode speichert, der, wenn er von der CPU der Computervorrichtung umgesetzt wird, die CPU veranlasst, Schritte gemäß dem Verfahren zum Erzeugen eines energieeffizienten Fahrwegs für das Fahrzeug in Betrieb, das sich entlang eines Streckenabschnitts in einem Stadtgebiet bewegt, gemäß einem der Ansprüche 1 bis 11 auszuführen.

13. Kraftfahrzeug, umfassend mindestens:
eine Bewegungsvorrichtung;
einen Motor, der mit der Bewegungsvorrichtung verbunden ist und diese antreibt;
ein Kraftfahrzeugsteuersystem, das dazu ausgelegt ist, den Motor des Kraftfahrzeugs zu steuern, wobei das System mindestens umfasst:
die Computervorrichtung zum Erzeugen eines energieeffizienten Fahrwegs für das Fahrzeug in Betrieb, das sich entlang eines Streckenabschnitts in einem Stadtgebiet bewegt, nach Anspruch 12.

14. Nicht-übertragbares computerlesbares Medium, das einen Programmcode speichert, der, wenn er durch eine CPU einer Computervorrichtung umgesetzt wird, die CPU veranlasst, Schritte gemäß dem Verfahren zum Erzeugen eines energieeffizienten Fahrwegs für das Fahrzeug in Betrieb, das sich entlang eines Streckenabschnitts in einem Stadtgebiet bewegt, gemäß einem der Ansprüche 1 bis 11 auszuführen.

## Revendications

1. Procédé destiné à générer une voie économe en énergie pour un véhicule en service parcourant une portion d'une route dans une zone urbaine, qui est exécuté par une CPU d'un dispositif informatique, le procédé comprenant au moins les étapes suivantes :
génération d'une première voie économe en énergie pour le véhicule en service parcourant une portion de la route dans une zone urbaine, la voie comprenant au moins un profil de vitesse du véhicule en service et sa trajectoire sur la portion de la route, dans laquelle la première voie économe en énergie pour le véhicule en service est générée pour une portion de la route qui est libre de tout autre véhicule,
détection d'un deuxième véhicule automobile se trouvant sur la même portion de la route et génération d'une voie économe en énergie pour le deuxième véhicule automobile, la voie comprenant au moins un profil de vitesse du deuxième véhicule automobile et sa trajectoire sur la portion de la route, dans laquelle la voie économe en énergie pour le deuxième véhicule automobile est générée pour la portion de la route qui est libre de tout autre véhicule ;
comparaison de la première voie économe en énergie du véhicule en service et de la voie économe en énergie du deuxième véhicule automobile afin d'obtenir des données de comparaison comprenant des données de trajectoires conjointes du véhicule en service et du deuxième véhicule automobile parcourant la portion de la route avec leurs profils de vitesse respectifs ;
et génération d'une deuxième voie économe en énergie pour le véhicule en service, sur la base des données de comparaison obtenues.

2. Procédé selon la revendication 1, **caractérisé en ce que** la première voie économe en énergie pour le véhicule en service est générée au moyen de la CPU du dispositif informatique mettant en œuvre un procédé destiné à générer une voie économe en énergie pour le véhicule automobile, le procédé comprenant les étapes suivantes :
collection de données primaires, qui consiste à obtenir des données relatives à un premier véhicule automobile, des données relatives à une portion de la route que doit parcourir le premier véhicule automobile, et des données relatives au véhicule en service, le véhicule en service parcourant la portion de la route après le premier véhicule automobile ;
collection de données secondaires, qui consiste à générer une voie du premier véhicule automobile, dans laquelle ladite voie est générée en se basant sur la façon dont le premier véhicule automobile a parcouru la portion de la route,
génération d'une voie économe en énergie pour le véhicule en service, dans laquelle la voie économe en énergie pour le véhicule en service est générée sur la base d'une voie générée pour le premier véhicule automobile ;
dans lequel la voie du premier véhicule automobile est générée en exécutant les étapes suivantes :
génération d'un profil de vitesse du premier véhicule automobile sur la portion de la route parcourue ;
évaluation de l'efficacité énergétique du premier véhicule automobile sur la portion de la route parcourue.

3. Procédé selon la revendication 1, **caractérisé en ce que** la voie économe en énergie pour le deuxième véhicule automobile est générée au moyen de la CPU du dispositif informatique mettant en œuvre un procédé destiné à générer une voie économe en énergie pour le véhicule automobile, le procédé comprenant les étapes suivantes :
collection de données primaires, qui consiste à obtenir des données relatives à un premier véhicule automobile, des données relatives à la portion de la route que doit parcourir le premier véhicule automobile, et des données relatives au deuxième véhicule automobile, dans laquelle le deuxième véhicule automobile parcourt la portion de la route après le premier véhicule automobile, mais avant le véhicule en service ;
collection de données secondaires, qui consiste à générer une voie du premier véhicule automobile, dans laquelle ladite voie est générée en se basant sur la façon dont le premier véhicule automobile a parcouru la portion de la route ;
génération d'une voie économe en énergie pour le deuxième véhicule automobile, dans laquelle la voie économe en énergie pour le deuxième véhicule automobile est générée sur la base d'une voie générée pour le premier véhicule automobile ;
dans lequel la voie économe en énergie du premier véhicule automobile est générée en exécutant les étapes suivantes :
génération d'un profil de vitesse du premier véhicule automobile sur la portion de la route parcourue ;
évaluation de l'efficacité énergétique du premier véhicule automobile sur la portion de la route parcourue.

4. Procédé selon l'une quelconque des revendications 1 à 3, **caractérisé en ce que** la deuxième voie économe en énergie pour le véhicule en service est générée au moyen de la CPU du dispositif informatique mettant en œuvre le procédé destiné à générer une voie économe en énergie pour le véhicule automobile, le procédé comprenant les étapes suivantes :
comparaison des trajectoires du véhicule en service et du deuxième véhicule automobile sur la même portion de la route, sur laquelle le véhicule en service et le deuxième véhicule automobile circulent ensemble ;
et une étape A consistant à générer une deuxième voie économe en énergie pour le véhicule en service, la voie comprenant au moins la deuxième trajectoire du véhicule en service sur la portion de la route qui n'intersecte pas la trajectoire du deuxième véhicule automobile sur la même portion de la route ;
ou une étape B consistant à générer une deuxième voie économe en énergie pour le véhicule en service, la voie comprenant la trajectoire du véhicule en service sur la portion de la route, dans laquelle ladite trajectoire intersecte la trajectoire du deuxième véhicule automobile sur la même portion de la route, et un profil de vitesse ajusté du véhicule en service, dans laquelle le profil de vitesse ajusté est généré de telle sorte que seul l'un des véhicules, à savoir le véhicule en service ou le deuxième véhicule automobile, soit présent au point d'intersection entre lesdites trajectoires du véhicule en service et du deuxième véhicule automobile à tout instant donné.

5. Procédé selon la revendication 4, **caractérisé en ce que** la deuxième voie économe en énergie pour le véhicule en service générée à l'étape A comprend en outre un profil de vitesse ajusté du véhicule en service, dans lequel ledit profil de vitesse ajusté est généré de manière à obtenir la deuxième trajectoire du véhicule en service sur la portion spécifiée de la route, qui n'intersecte pas la trajectoire du deuxième véhicule automobile sur la même portion de la route.

6. Procédé selon la revendication 5, **caractérisé en ce que** la voie économe en énergie pour le deuxième véhicule automobile générée à l'étape A comprend en outre un profil de vitesse ajusté du deuxième véhicule automobile, dans lequel ledit profil de vitesse ajusté est généré de manière à obtenir la deuxième trajectoire du deuxième véhicule automobile sur la portion spécifiée de la route, qui n'intersecte pas la deuxième trajectoire du véhicule en service sur la même portion de la route.

7. Procédé selon la revendication 6, **caractérisé en ce que** la voie économe en énergie pour le deuxième véhicule automobile générée à l'étape A comprend en outre un profil de vitesse ajusté du deuxième véhicule automobile, dans lequel ledit profil de vitesse ajusté est généré de manière à obtenir la deuxième trajectoire du deuxième véhicule automobile sur la portion spécifiée de la route, qui n'intersecte pas la deuxième trajectoire du véhicule en service sur la même portion de la route.

8. Procédé selon la revendication 7, **caractérisé en ce que** l'étape B comprend en outre une étape consistant à générer une deuxième voie économe en énergie pour le deuxième véhicule automobile, la voie comprenant la trajectoire du deuxième véhicule automobile sur la portion de la route, dans laquelle ladite trajectoire intersecte la trajectoire du véhicule en service sur la même portion de la route, et un profil de vitesse ajusté du deuxième véhicule automobile, dans laquelle le profil de vitesse ajusté est généré de telle sorte que seul l'un des véhicules, à savoir le véhicule en service ou le deuxième véhicule automobile, soit présent au point d'intersection entre lesdites trajectoires du véhicule en service et du deuxième véhicule automobile à tout instant donné.

9. Procédé selon la revendication 7, **caractérisé en ce que** la trajectoire du deuxième véhicule automobile comprend un point de décélération du deuxième véhicule automobile sur la portion de la route.

10. Procédé selon la revendication 9, **caractérisé en ce que** l'étape A comprend en outre une étape consistant à générer une deuxième voie économe en énergie pour le deuxième véhicule automobile, la voie comprenant au moins la deuxième trajectoire du deuxième véhicule automobile sur la portion de la route, dans laquelle ladite trajectoire comprend un point de décélération ajusté du deuxième véhicule automobile, et dans laquelle ledit point de décélération ajusté est sélectionné de manière à fournir la deuxième trajectoire du deuxième véhicule automobile, qui n'intersecte pas la deuxième trajectoire du véhicule en service sur la portion de la route.

11. Procédé selon la revendication 10, **caractérisé en ce que** la deuxième voie économe en énergie pour le deuxième véhicule automobile générée à l'étape A comprend en outre un profil de vitesse ajusté du deuxième véhicule automobile, dans lequel ledit profil de vitesse ajusté est généré de manière à obtenir la deuxième trajectoire du deuxième véhicule automobile sur la portion spécifiée de la route, qui comprend le point de décélération du deuxième véhicule automobile, lequel n'est pas un point situé sur la deuxième trajectoire du véhicule en service sur la portion de la route.

12. Dispositif informatique destiné à générer une voie économe en énergie pour un véhicule en service parcourant une portion d'une route dans une zone urbaine, le dispositif comprenant au moins :
une CPU ;
une mémoire qui stocke un code de programme qui, lorsqu'il est exécuté par la CPU du dispositif informatique, amène la CPU à exécuter des étapes selon le procédé destiné à générer une voie économe en énergie pour le véhicule en service parcourant une portion d'une route dans une zone urbaine, selon l'une quelconque des revendications 1 à 11.

13. Véhicule automobile comprenant au moins :
un dispositif de déplacement ;
un moteur relié au dispositif de déplacement et actionnant celui-ci ;
un système de commande pour véhicule automobile adapté pour commander le moteur du véhicule automobile, le système comprenant au moins :
le dispositif informatique destiné à générer une voie économe en énergie pour le véhicule en service parcourant une portion d'une route dans une zone urbaine, selon la revendication 12.

14. Support lisible par ordinateur, non éphémère, sur lequel est stocké un code de programme qui, lorsqu'il est exécuté par la CPU d'un dispositif informatique, amène la CPU à exécuter des étapes selon le procédé destiné à générer une voie économe en énergie pour un véhicule en service parcourant une portion d'une route dans une zone urbaine, selon l'une quelconque des revendications 1 à 11.
